# EUROPEAN PATENT APPLICATION

(11) **EP 1 725 067 A1**
(43) Date of publication of application: **22.11.2006**
(21) Application number: 06705506.1
(22) Date of filing: 19.01.2006
(51) Int. Cl.: H04Q 7/38

(54) **A SYSTEM FOR MOBILE HOST REALIZING MULTICAST SERVICE AND THE METHOD THEREOF**

(30) Priority: 19.01.2005 CN 200510002374
(71) Applicant: Huawei Technologies Co., Ltd., Longgang District, Shenzhen, Guangdong 518129 (CN)
(72) Inventor: LIU, Enhui, Huawei Administration Building, Shenzhen, Guangdong 518129 (CN); SHEN, Bo, Huawei Administration Building, Shenzhen, Guangdong 518129 (CN); ZHANG, Hongke, Huawei Administration Building, Shenzhen, Guangdong 518129 (CN); LIU, Yulan, Huawei Administration Building, Shenzhen, Guangdong 518129 (CN)
(74) Representative: Skuhra, Udo
(86) International application number: PCT/CN2006/000085
(87) International publication number: WO 2006/076862

(57) **Abstract**

A system and a method for a Mobile Host (MH) implementing a multicast service, wherein each MH corresponds to a Dynamic multicast Agent (DMA); the DMA needs to implement dynamic switch according to the path that the MH passes when moving; if the DMA of the MH is switched to the MSA of the current multicast sub-network, the MH joins the multicast group directly, thereby optimizing the transmission path of the multicast. The present invention can not only make the multicast distributing tree reconstruction caused by moving of the MH less frequent, but also avoid a too long tunnel form between the DMA and the MSA of a foreign multicast sub-networks, thereby optimizing the transmission path of the multicast packet. The present invention can also make the best use of network resources, and prevent the DMA from becoming the bottleneck of network communication while avoiding tunnel congregation.

## Description

### Field of the Technology

The present invention relates to network communication techniques, and more particularly, to a system and a method for a mobile host implementing a multicast service.

### Background of the Invention

The multicast technique, which is a sort of routing technique using an optimized network bandwidth, allows an IP data flow to be sent from one source or multiple sources to multiple destinations. It reduces the traffic of backbone network by adopting the multicast technique. Therefore, IP multicast has been a focus in Internet researches for a long time. At present, it is a great aspiration to combine the IP multicast with Mobile IP (MIP) in a mobile field, which will make it possible to provide multicast services to a Mobile Node (MN), that is to say, implementing an MIP multicast. The MN here can be called Mobile Host (MH) as well.

The MIP technique makes an MN keep the on-going communication when the MN switches from one link to another. According to the MIP, the home network of the MN is called a Home Network (HN); the network where the MN is roaming about is called a Foreign Network (FN). A router operating on the HN of the MN, which is called Home Agent (HA), is in charge of saving the current location information of the MN, intercepting the messages sent to the MN and forwarding the messages to the current location of the MN by way of a tunnel. A router operating on the FN, which is called Foreign Agent (FA), is the default router via which the MN sends messages in the FN and sometimes is also used to provide the tunnel de-encapsulation service.

For the MIP, multicast protocols not only need to manage multicast group members, set up and maintain multicast distributing tree, but also need to solve the problems that caused by the dynamical changes of the MN's location d. The situation that a node receives and sends multicast data when it moves has not been considered because the multicast protocols using in present Internet all assume that their members are static. Hence, there have appeared several solutions aiming at the situation that an MN receives and sends multicast data, which are hereinafter described, respectively.

The first adopted scheme is a Mobile IP-Bidirectional Tunnel (MIP-BT) scheme, which sets up a bidirectional tunnel between the MN and it's HA. The MN not only joins or leaves a multicast group through the bidirectional tunnel, but also receives and sends multicast data through the tunnel.

When an MN is acting as a multicast receiver, it sends a multicast Listener Discovery (MLD) joining report message to the HA through the tunnel to request for joining the multicast group. When the HA receives the MLD joining report message, the HA adds the MN to the multicast group. the HA maintains a multicast route by way of implementing a group management protocol and sets up a multicast distributing tree which is from a multicast source to the HN by a multicast route protocol. During the transmission, a multicast data packet is transmitted to the HN first, and then sent to the MN in a unicast mode through the tunnel via the HA. A report on the relationship between the MN members can be made by a unicast to the HA.

When the MN is acting as a multicast sender, it sends the multicast data packet to the HA first; and then the HA is in charge of sending the multicast data packet by way of the multicast through the distributing tree.

The MIP-BT scheme may have the following disadvantages:
1. there is a disadvantage that link cost is high because a triangle-route is used other than an optimum route; especially, when the MN is far from the HN and has joined a local multicast group of a foreign link, additional cost incurred by this scheme will be more notable.
2. the procedure by which the HA transmits the multicast data packet through the tunnel is completed in a unicast way, therefore every MN will set up a tunnel with the HA and every MN will receive several repeated multicast data packets through different tunnels when the HA has multiple MNs in the same foreign link, which results in the "tunnel congregation problem". Apparently, the efficiency of this scheme is low; the waste of link bandwidth is severe; and the multicast becomes a unicast in a certain sense.
3. the HA becomes a "failure point". The efficiency of the multicast distributing is reduced and the error probability is increased since the load of the HA will be increased dramatically along with the increasing number of the MNs. Errors of the HA will result in interrupting multiple multicast applications, which makes the HA a failure point.

The second current adopted scheme is the Mobile IP Remote Suscription (MIP-RS) scheme. According to this scheme, an MN will rejoin the multicast group as a fixed node and recalculate the corresponding multicast distributing tree each time it has changed the network where it is located. When the MN moves to an FN, the MIP-RS scheme requests it to send joining message through the FN; a multicast route in the FN is in charge of adding the MN to the multicast distributing tree; the working mode of the multicast application is the same as a fixed node. The above-mentioned MIP-RS scheme may have the following disadvantages:
1. When the MN is acting as the multicast receiver and switches to another network, the switching delay is high because there are multicast group rejoining and multicast distributing tree updating; resulting in a loss of quite a number of multicast groups and an impact on the reliability of the multicast application.
2. When the MN is acting as the multicast source, it can only be applied in a shared tree. For a source tree, much protocol cost will be brought about because recalculation and setting-up of an entire multicast distributing tree is needed.
3. a special "synchronization loss" problem in the mobile environment will be brought about because the delay for receiving the multicast group in each sub-net is different.

The third currently adopted scheme is the Mobile Multi-point Transfer Protocol (MoM) scheme. The scheme is a new scheme based on the bidirectional tunnel. In MoM, the FA selects an HA as the Designated Multicast Service Provider (DMSP) from an aggregation of HAs for every multicast group. For each multicast group, among all the HAs of the multicast group, only the DMSP can set up the tunnel with the FA and transmit the data packet. In this way, forwarding the same multicast data packet to the same FA through different tunnels can be avoided. However, the MoM scheme may have the following disadvantages:
1. The triangle-route problem is inevitable because the DMSP is a representative which is selected from the HAs of the MN and is used to set up the tunnel with the FA.
2. Since the old foreign link loses an MN and the new foreign link gains an MN when the MN switches to a new foreign link, new cost will be brought about because the new and old FAs both need to recalculate the DMSP in order to decide whether to implement a new DMSP selection.
3. The reselection of the DMSP brings a multicast group loss problem. When a new DMSP has not been selected, the tunnel will not be set up and there will be no multicast data packet sent to the FA. So the multicast data packet sent to the MN will be lost. Not only will the reselection of the DMSP affect the moving MN, but there will be the multicast data packet loss problem in the MNs which belong to other HAs and are supposed to be provided with the multicast service by the DMSP in the old foreign link.

The fourth currently adopted scheme is the Multi-point Transfer Agent (MA) scheme. In the scheme, a multicast agent, which is a multicast router, is the entrance of the MH to a multicast Backbone network through the FA. The multicast agent covers multiple foreign sub-nets and joins the corresponding multicast group as a representative of mobile members within the service area. The multicast Agent scheme uses the three-level architecture of MH-FA-multicast Agent. The MH can be kept close to the entrance of the multicast Backbone Network through controlling the cover range of a multicast Agent while the service areas of different multicast Agents are not overlapped, thereby avoiding the tunnel congregation problem.

The MA scheme may have the following disadvantages:
1. As the multicast Agent is close to the interface of the multicast Backbone network; the affected area will be relatively large if the multicast Agent goes wrong.
2. There is a longer interruption of a multicast service when the multicast distributing tree is being reconstructed.

To sum up, in a Mobile multicast, a node has to rejoin the multicast distributing tree as a new member after the node switches between the sub-nets due to its movement. As a result, the multicast distributing tree will be updated and reconstructed frequently, which brings about too much cost for the management of the multicast group and the maintenance of the multicast distributing tree, thereby burdening the network load. At the same time, the communication recovering time of the MN is made longer, which severely affects the communication quality. Although there are many schemes having been proposed, these schemes have common disadvantages including triangle-route, tunnel congregation, long switch delay and much packet loss.

### Summary of the Invention

A system for a Mobile Host (MH) implementing a multicast service is provided, such that the MH can select one Dynamic multicast Agent (DMA) to provide the multicast service when it moves; thereby reducing such problems as frequent switchings, a switching delay, a tunnel congregation and a packet loss.

A method for a Mobile Host (MH) implementing a multicasts service is also provided, which can solve such problems as triangle-route, tunnel congregation, too long switch delay and much packet loss existing in the multicast solutions in the prior art.

### The present invention provides the solution as follows:

A system for a Mobile Host (MH) implementing a multicast service, includes:
a Multicast Sub-network Agent (MSA), which is the only multicast Access Point of a multicast Sub-network to which the MSA belongs, in charge of providing a multicast service for the MH which is a multicast member in the multicast sub-network, recording the multicast groups of all the multicast members in the multicast sub-network and maintaining a corresponding multicast route list; and
a Dynamic multicast Agent (DMA), which is one of the MSAs corresponding to all the multicast Sub-networks that the MH passes when moving, used to provide the multicast service for the MH, support the MH to access the multicast Backbone network and maintain the information of the MSAs that the corresponding MH passes when moving.

The MSA is an access router in the multicast sub-network.

The DMA is a multicast router which is located in each multicast sub-network and is involved in a multicast routing of the Internet.

A method for a Mobile Host (MH) implementing a multicast service, includes:
selecting and determining a Multicast Sub-network Agent (MSA) as a Dynamic Multicast Agent (DMA) of the MH according to the information of the path that the MH passes when moving; and
implementing the multicast service for the MH through the determined DMA.

The method further includes the step of:
each MSA in a mobile communication network recording the DMA information of the MH.in the same sub-network repectively.

The method further includes the step of:
setting a corresponding Tunnel State flag for each multicast group in the multicast route list of each MSA of the mobile communication network.

The method further includes the step of:
recording the corresponding information of each MSA that the MH passes when moving in the DMA.

The Step of selecting and determining an MSA as a DMA of the MH includes:
the MH taking the first MSA that the MH passes when moving as the DMA, creating record entries for the information of each MSA that the MH passes when moving, and recording the DMA information of the MH in the MSA.

The Step of selecting and determining an MSA as a DMA of the MH includes:
adding the MH to the multicast route list when the MH moves to a new multicast sub-network and there is a multicast group which the MH requests to join in the multicast route list of the new multicast sub-network; and
the Step of implementing the multicast service for the MH through the determined DMA includes:
determining whether the tunnel state of the multicast group which the MH joins is valid, if the tunnel state of the multicast group which the MH joins is valid, the MH implementing the multicast service through the tunnel, otherwise, the MH joining the multicast group directly to implement the multicast service.

The Step of selecting and determining an MSA as a DMA of the MH further includes:
determining whether there is DMA information of the MH in the MSA, if there is DMA information of the MH in the MSA, making no processing; otherwise, taking the MSA as the DMA of the MH and determining, based on the DMA, the information of the MSAs that the MH passes when moving.

The Step of selecting and determining an MSA as a DMA of the MH further includes:
obtaining a Previous DMA (PDMA) of the MH and instructing the PDMA to delete all the information of the MH.

The Step of selecting and determining an MSA as a DMA of the MH includes:
setting up a new multicast route entry for the MH when the MH moves to a new multicast sub-network and there is no multicast group which the MH requests to join in the multicast route list of the multicast sub-network;
deciding whether there is DMA information of the MH saved in the MSA, if there is DMA information of the MH in the MSA, taking this DMA as the DMA of the MH, and terminating the current procedure; otherwise, deciding the DMA of the MH according to the PDMA of the MH.

The Step of deciding the DMA of the MH further includes:
obtaining the PDMA of the MH through communication with the previous MSA of the MH; and
communicating with the PDMA of the MH and deciding whether a DMA switch is in need, if a DMA switch is in need, taking the MSA where the MH is located as the DMA of the MH and storing the DMA information of the MH; otherwise, taking the PDMA of the MH as the DMA of the MH.

The Step of deciding whether a DMA switching is in need includes:
deciding whether the number of the MSAs recorded in the DMA has exceeded a set number, wherein the MSAs are the MSAs that the MH passes when moving, if the number of the MSAs recorded in the DMA exceeds the set number, deciding that it is needed to implement a DMA switch, otherwise, deciding that it is not needed to implement a DMA switch.

The Step of implementing the multicast service for the MH through the determined DMA includes:
if the MSA where the MH is located is taken as the DMA of the MH, the MH joining the multicast group directly to implement the multicast service; and
if the PDMA of the MH is taken as the DMA of the MH, the MH implementing the multicast service through the tunnel between itself and the DMA.

The method further includes the step of:
the MSA detecting periodically whether the MH has left the multicast sub-network, if the MH has left the multicast sub-network, deleting the MH from the recorded DMA information and deleting the MH from the multicast route list at the same time.

As can be seen from the technical scheme provided by the present invention, the present invention may have the following advantages:
(1) it is possible to reduce the frequent reconstruction of the multicast distributing tree caused by the movement of the host: as only when there is a DMA switch will the reconstruction of the multicast distributing tree be brought about, in the present invention, the MH can select the same DMA to provide the multicast service when the MH moves among multiple sub-networks, the reconstruction of the multicast distributing tree will not be brought about frequently;
(2) it is possible to avoid a too long tunnel formed between the DMA and the foreign sub-network MSA by way of controlling the conditions for DMA switch, thereby optimizing the forwarding path of the multicast packets; furthermore, the MH can receive the multicast packets directly through the foreign multicast sub-network when there is a DMA switch and therefore it has the most optimized multicast forwarding path;
(3) in the present invention, the DMA of the MH switches dynamically according to the path of the MH; compared with the multicast Agent of which the location is fixed, the present invention can make better use of network resources, thereby preventing the multicast Agent from becoming the bottleneck of the network communications.
(4) the Tunnel State set by the present invention can ensure that multiple hosts which are in the same multicast sub-network and have joined the same multicast group can share the multicast service provided by one multicast Agent, thereby avoiding the tunnel congregation problem.

### Brief Description of the Drawings

Figure 1 is a schematic diagram illustrating the architecture of a system for an MH implementing a multicast service in accordance with an embodiment of the present invention;
Figures 2A and 2B are the flow charts of the method for an MH implementing a multicast service in accordance with an embodiment of the present invention.

### Detailed description of the Invention

The core idea of the embodiment of the present invention is: determining a compromise scheme between selecting the shortest forwarding path and reconstructing the multicast distributing tree frequently such that the multicast group could always be transmitted through a "nearly" path close to the optimal path without too much cost for maintaining the multicast distributing tree. While the network resources can be fully used, the tunnel congregation problem of the bidirectional tunnel can also be solved.

The embodiment of the present invention introduces the concepts of Dynamic multicast Agent (DMA) and Tunnel State while employing the existing concept of multicast Sub-network Agent (MSA). The DMA joins the multicast group on behalf of the MH, sends the multicast packets to the MSA of the FN where the MH is located through the tunnel, thereby reducing the times of reconstructing multicast distributing tree due to the location change of the MH.

In the embodiment of the present invention, each MH corresponds to a DMA. The DMA needs to implement dynamic switching according to the path which the MH passes during its movement. If the DMA of the MH switches to the MSA of the current sub-network, the MSA joins the multicast group directly, thereby optimizing the multicast forwarding path.

In the embodiment of the present invention, it is possible to avoid a too long tunnel between the MH and the DMA because the distance between the DMA and the foreign sub-network is short. For the same reason, the multicast packet forwarding path can be optimized as well.

Compared with a fixed multicast agent like the HA, the dynamic switching of the DMA saves the network resources effectively.

In the embodiment of the present invention, the Tunnel State can ensure that multiple MHs which are in the same sub-network and have joined the same multicast group share one multicast Agent to provide the service, thereby avoiding the tunnel congregation problem.

To have a further understanding of the embodiment of the present invention, there will be hereinafter a detailed description of the system and method in accordance with the embodiments of the present invention with reference to the accompanying drawings.

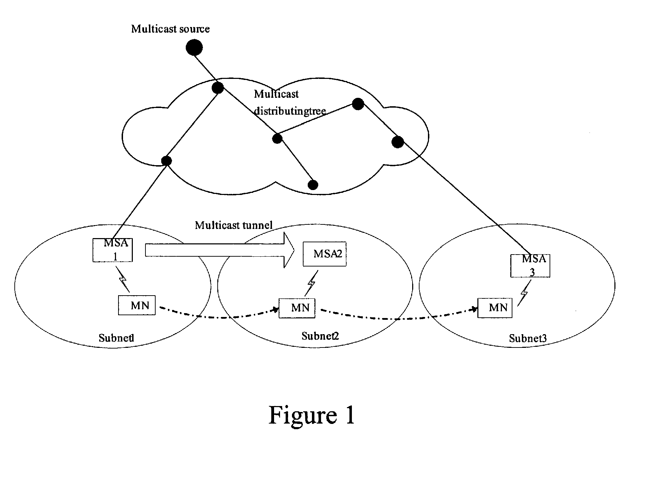

As shown in Figure 1, the system for an MH implementing a multicast service in accordance with an embodiment of the present invention mainly includes: a Multicast Sub-network Agent (MSA) and a Dynamic multicast Agent (DMA), of which the functions are described respectively as follows:

The MSA is the only multicast Access Point of each multicast Sub-network; the MH as a multicast group member needs to access the multicast through the MSA; the multicast Sub-network includes every sub-network that the MH passes when it moves;
the MSA is in charge of providing the multicast services for the multicast members in the multicast sub-network; recording the multicast groups of all the multicast members in the multicast sub-network; maintaining the multicast routing tables which correspond to each multicast group. The embodiment of the present invention further adds a Tunnel State flag to the multicast routing table, which is used to determine whether it is needed to receive the multicast packet through a tunnel; if the flag is valid, it is confirmed that the MHs of the multicast group, i.e., the multicast members, need to receive the multicast packets of the multicast group through a tunnel, otherwise, the MH joins the multicast distributing tree directly to receive the multicast packet;

In one embodiment, the MSA can be an access router of the multicast sub-network.

The DMA: every MH as a multicast member detemines an MSA as its own corresponding DMA according to the information of the path passed in order to provide the multicast service for itself; the DMA is the access point for the MH to access the multicast Backbone Network. In fact, the DMA is one of the MSAs, through which the MH passes when it moves. The dotted lines in Figure 1 are the moving path of an MH which moves from multicast Subnet 1(Subnet 1) to Subnet 2 and then moves to Subnet 3.

The DMA needs to maintain the information of each MSA passed by the MH and covered by the DMA when the MH moves, i.e., the path information. The DMA will determine whether the DMA needs to switch for the MH according to the maintained information of the MSA, that is, whether it is needed to select a new MSA to be the DMA of the MH;

In one embodiment, the DMA can be a multicast router which is located in a multicast sub-network and involves in the Internet multicast route.

Based on the above system, the method for an MH implementing a multicast service in accordance with the embodiment of the present invention includes: setting up an access control list and a DMA selection list in the MSA and DMA respectively, wherein the access control list is used to store each MH's information of the DMA in the multicast sub-network and the DMA selection list is used to store the information of the MSAs passed by the MH that is covered by the DMA when the MH moves. Every MSA maintains one access control list as shown in Table 1:

**Table 1**

| MH | DMA |
|---|---|
| | |

In Table 1, the entry of MH is used to record the MH which moves to the local sub-network,i.e., the MH that is covered by the local MSA; the entry of DMA is used to record the information of the DMA which corresponds to the MH.

The DMA selection list can be maintained by the DMA or can be maintained by each MH for itself; the list is used to store the information of the MSAs passed through the MH that is covered by the DMA when the MH moves recently. In this way, whether the MH needs to implement a DMA switch can be decided according to the number of the MSAs recorded in the list. The entries in the DMA selection list change dynamically with the path along which the MH moves.

The DMA selection list maintained in the DMA which corresponds to the MH is shown in Table 2:

**Table 2**

| |
|---|
| MH |
| MSA1 |
| MSA2 |
| ····· |
| MSAn |

In the table, the MH entry is used to record the MH which selects the MSA as the DMA; the MSA entry is used to record the MSA of each sub-network on the path through which the MH moves, that is, record the path information the MH passes through when it moves.

Besides the above two lists, the MSA records the multicast groups of all the members in the multicast sub-network according to the MLD protocol and maintains the multicast route list , the original table of the MSA , by sending a group query message periodically. What is proposed by the embodiment of the present invention is to maintain a new state by a flag for every group address in the entries managed in the multicast route list of the MSA, that is, the Tunnel State which is used to record whether the multicast member needs to receive the multicast packet through a tunnel.

The implementation of the method in accordance with the embodiment of the present invention will be further described below by taking an MH moving to an FN as an example.

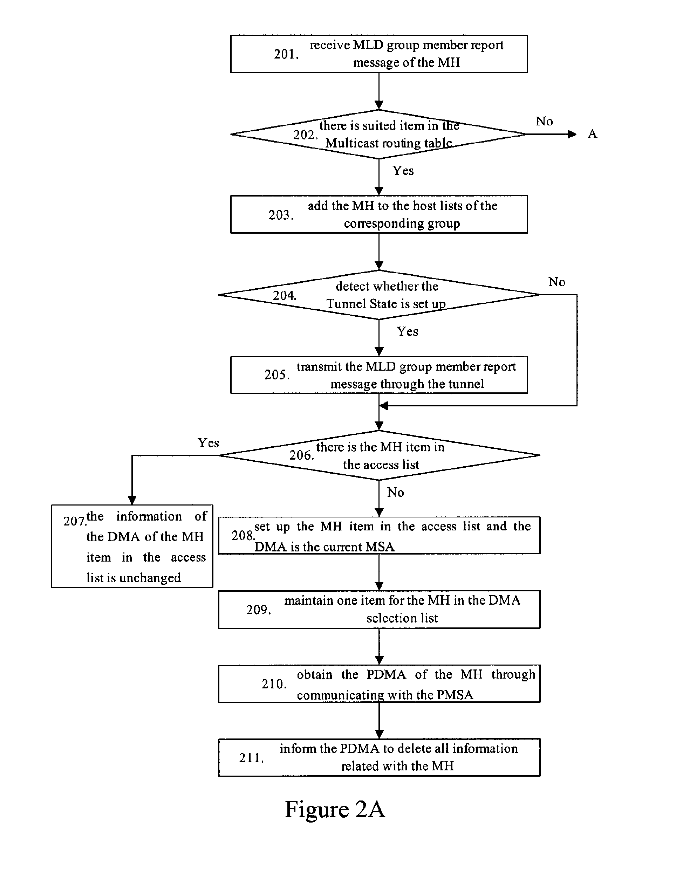

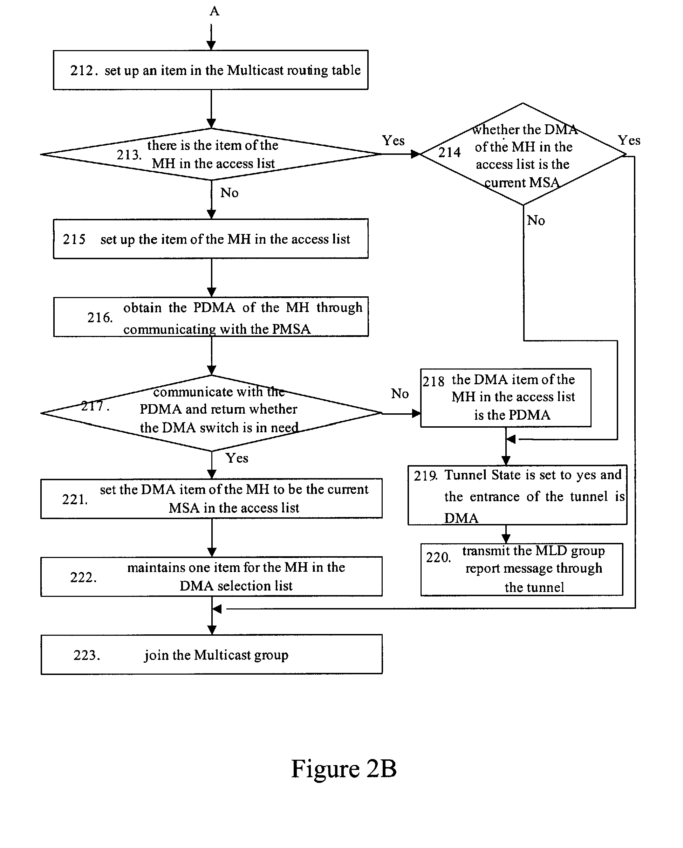

When the MH obtains a new care of address in a new foreign multicast sub-network and registers with the HA, it sends at once an MLD group member report message and the IP address of the MSA in the previous foreign multicast sub-network, that is, the IP address of a Previous MSA (PMSA), to the MSA of the present multicast sub-network. Suppose that the multicast group which the MH requests to join is multicast group G. At this time, the specific implementation of the method in accordance with the embodiment of the present invention based on the above system and the contents of the above lists is shown in Figure 2A and Figure 2B, which includes:
Step 201: the MSA of the multicast sub-network where the MH is located receives the MLD group member report message which means that the MH requests to join multicast group G;
Step 202: detect whether the entry of multicast group G that the MH joins exists in the multicast route list maintained by the MSA of the present multicast sub-network; if the entry of multicast group G that the MH joins exists, perform Step 203; otherwise, perform Step 212;
Step 203: confirm that the entry of multicast group G has existed in the multicast route list maintained by the MSA and adds the MH to the group member host list;
Step 204: detect whether the entry of Tunnel State which corresponds to the multicast group G is valid, that is, whether the multicast tunnel has been set up; if the entry of Tunnel State which corresponds to the multicast group G is valid, indicating that the tunnel has been set up for the multicast group to receive the multicast data, then perform Step 205; otherwise, the MH joins the multicast group to receive the multicast data directly, and perform Step 206 to implement maintaining and updating of the access control list;
Step 205: the MSA transmits the received MLD group member report message to the other side of the tunnel so that the MH which requests to join multicast group G can receive the multicast data through the tunnel; at the same time, Step 206 should also be performed to implement maintaining and updating of the access control list;
Step 206: detect whether there is the MH in the access control list maintained by the MSA, that is, whether there is the entry of the MH in the access control list maintained by the MSA ; if the entry of the MH exists, perform Step 207; otherwise, perform Step 208;
Step 207: keep the DMA information of the MH entry unchanged and terminate the current procedure;
Step 208: set up one entry in the access control list for the MH; at the same time, since there is the entry of multicast group G in the multicast route list, the DMA of the MH is set as the MSA of the current sub-network in the established entry to optimize the transmission path;
Step 209: maintain one entry for the MH in the DMA selection list of the MSA;
Steps 210-211: the MSA communicates with the PMSA, obtains the previous DMA information of the MH and instructs the Previous DMA to delete all the data structures of the MH; and terminates the current procedure;
Step 212: determine that there is no entry of multicast group G in the multicast route list of the MSA, which denotes that the MH is the first multicast member of multicast group G in the multicast sub-network; therefore the MSA sets one entry for multicast group G in the multicast route list;
Step 213: detect whether there is the entry of the MN in the access control list maintained by the MSA; if the entry of the MN exists in the access control list, perform Step 214, otherwise, perform Step 215;
Step 214: determine that there is the entry of the MH in the access control list of the MSA, then detect whether the DMA of the MH in this entry is the current MSA; if the DMA of the MH in this entry is the current MSA, perform Step 223; otherwise, perform Step 219;
Steps 215-216: determine that there is no entry of the MH in the access control list of the MSA, and then set up one entry for the MH in the access control list; the current MSA communicates with the PMSA and obtains the information of the Previous DMA (PDMA);
Step 217: communicate with the PDMA of the MH and decide whether to implement a DMA switch; if a DMA switch is needed, perform Step 221, otherwise, perform Step 218;
Step 218: determine that it is not needed to implement a DMA switch, and the DMA of the MH in the access control list is the PDMA;
Step 219: set the Tunnel State as valid, that is, set up a tunnel to the DMA in the entry wherein the tunnel entrance is the DMA;
Step 220: transmit the MLD group member report message through setting up the tunnel; upon joining the multicast group through the tunnel, use the tunnel to receive the multicast data; and terminate the current procedure;
Steps 221-222: determine that a DMA switch is needed; take the MSA of the current sub-network as the new DMA; at the same time, maintain one entry for the MH in the DMA selection list of the MSA;
Step 223: join the multicast group directly.

The above procedure also includes detecting the leaving of the MH group member by the MSA through the timeout of a timer, because when an MH group member leaves the current multicast sub-network, it can not sends a leaving message. If it is detected that a certain MH has left the current multicast sub-network, the MSA deletes the entry maintained for the MH in the access control list, and deletes the MH in the group member list of each multicast group the MH belongs to.

In the embodiment of the present invention, each MH corresponds to only one DMA; the DMA selection list decides whether the DMA switch of an MH is in need. To make the DMA selection list understood more clearly, the main procedure for creating an entry of the DMA selection list under different circumstances will be described in detail hereinafter:

The first circumstance: if the current link belongs to the first multicast sub-network that the MH passes, the MSA of the multicast sub-network is selected as the DMA of the MH, which becomes the initial DMA of the MH; meanwhile, set up and maintain an entry for the MH in the DMA selection list of the MSA;

The second circumstance: when the MH moves to a new foreign multicast sub-network, and the corresponding MSA receives the MLD group member report message of the MH and has already had a group member which belongs to the multicast group and is receiving the multicast data of the multicast group at the time, if there is no entry of the MH in the access control list of the MSA, the MSA of the current multicast sub-network is taken as the DMA of the MH; in this case, set up and maintain an entry for the MH in the DMA selection list of the MSA, and instruct the PDMA to delete all the data structures related with the MH;

The third circumstance: the MH moves to a new foreign multicast sub-network, and the corresponding MSA receives the MLD group member report message of the MH; the MH is the first group member of the multicast sub-network and there is no entry of the MH in the access control list of the MSA; in this case, the MSA communicates with the PDMA of the MH; if the selection list of the PDMA indicates that a DMA switch is in need, then the MSA of the current multicast sub-network is taken as the current DMA of the MH; at this time, set up and maintain an entry for the MH in the DMA selection list for the MSA.

After describing the procedure for creating an entry in the DMA selection list, the procedure of maintaining and updating the DMA selection list which corresponds to each MH is described as follows:
when the DMA selection list of the MSA has the MH as the initial created entry, the MH is written in the entry and the MSA of the current multicast sub-network is written as the MSA1 in the MSA column as shown in Table 2;
then, whenever the MH moves to a new foreign multicast sub-network, the MSA of the new multicast sub-network communicates with the DMA of the MH; if the message received by the DMA is sent from the MSA of the new multicast sub-network and the content of the message is that there has been a DMA switch in the new foreign multicast sub-network, then the DMA deletes the entry maintained for the MH in the DMA selection list;

If the message received by the DMA does not indicate a DMA switch, the DMA detects whether there is the a record for the MSA in the entries of its own DMA selection list maintained for the MH, if there is no record of the MSA of the new foreign multicast sub-network, the DMA writes the new foreign MSA in order in the column of MSA in the DMA selection list;
when the MSA column has all its entries recorded for MH, that is, the MHs recorded in the MSA column have reached the number of MHs that the column can record most, in another word, the MH has passed the set number of multicast sub-networks after it selects a certain DMA, then it is decided to implement a DMA switch; the current DMA of the MH will delete the entry maintained for the MH in the DMA selection list and send a DMA switch message to the MSA of the multicast sub-network where the MH is currently located; the MSA takes itself as the new DMA of the MH upon receiving the message. At this time, an entry is set up and maintained for the MH in the DMA selection list of the current MSA.

There are mainly two methods for an MH implementing a multicast service in a multicast sub-network: one is taking the MSA of the local multicast sub-network as the DMA to join the multicast group and implement the multicast service; the other is setting up a tunnel between the DMAs of the local multicast sub-network and a non-local multicast sub-network and using the tunnel to implement the multicast service. The specific procedure for implementing a multicast service is as follows:

If the MSA needs to receive the multicast data through the DMA of a foreign network, setting up a tunnel between the MSA and the DMA means that there has been a multicast member of the corresponding multicast group; at this time then, the group query message and group report message can be transmitted through the tunnel, and the multicast service can also be implemented through the tunnel;
if there are in the DMA the group members which belong to the multicast group in the DMA, the DMA adds the link which leads to the MSA to the output interface list of the entry of the multicast group in the multicast route list;
if the DMA has not joined the multicast group, it still needs to apply for joining the multicast group;
when the DMA receives the multicast data, it transmits the data to all the group members by way of local multicast, that is, forwarding the multicast data to other MSAs as needed through the tunnel.

The above description is only preferable embodiments of the present invention and is not for use in limiting the protection scope thereof. Any change or substitution easily occurred to those skilled in the art and within the technical scope disclosed in this invention should be covered by the protection scope of the invention. Therefore, the protection scope of the present invention should be that as defined by the appended claims.

## Claims

1. A system for a Mobile Host (MH) implementing a multicast service, comprising:
a Multicast Sub-network Agent (MSA), which is the only multicast Access Point of a multicast Sub-network to which the MSA belongs, in charge of providing a multicast service for the MH which is a multicast member in the multicast sub-network, recording the multicast groups of all the multicast members in the multicast sub-network and maintaining a corresponding multicast route list; and
a Dynamic multicast Agent (DMA), which is one of the MSAs corresponding to all the multicast Sub-networks that the MH passes when moving, used to provide the multicast service for the MH, support the MH to access the multicast Backbone network and maintain the information of the MSAs that the corresponding MH passes when moving.

2. The system according to claim 1, wherein the MSA is an access router in the multicast sub-network.

3. The system according to claim 1 or claim 2, wherein the DMA is a multicast router which is located in each multicast sub-network and is involved in a multicast routing of the Internet.

4. A method for a Mobile Host (MH) implementing a multicast service, comprising:
selecting and determining a Multicast Sub-network Agent (MSA) as a Dynamic Multicast Agent (DMA) of the MH according to the information of the path that the MH passes when moving; and
implementing the multicast service for the MH through the determined DMA.

5. The method according to claim 4, further comprising:
each MSA in a mobile communication network recording the DMA information of the MH.in the same sub-network repectively.

6. The method according to claim 4, further comprising:
setting a corresponding Tunnel State flag for each multicast group in the multicast route list of each MSA of the mobile communication network.

7. The method according to any one of claim 4 to claim 6, further comprising:
recording the corresponding information of each MSA that the MH passes when moving in the DMA.

8. The method according to claim 7, wherein the Step of selecting and determining an MSA as a DMA of the MH comprises:
the MH taking the first MSA that the MH passes when moving as the DMA, creating record entries for the information of each MSA that the MH passes when moving, and recording the DMA information of the MH in the MSA.

9. The method according to claim 8, wherein the Step of selecting and determining an MSA as a DMA of the MH comprises:
adding the MH to the multicast route list when the MH moves to a new multicast sub-network and there is a multicast group which the MH requests to join in the multicast route list of the new multicast sub-network; and
the Step of implementing the multicast service for the MH through the determined DMA comprises:
determining whether the tunnel state of the multicast group which the MH joins is valid, if the tunnel state of the multicast group which the MH joins is valid, the MH implementing the multicast service through the tunnel, otherwise, the MH joining the multicast group directly to implement the multicast service.

10. The method according to claim 9, wherein the Step of selecting and determining an MSA as a DMA of the MH further comprises:
determining whether there is DMA information of the MH in the MSA, if there is DMA information of the MH in the MSA, making no processing; otherwise, taking the MSA as the DMA of the MH and determining, based on the DMA, the information of the MSAs that the MH passes when moving.

11. The method according to claim 10, wherein the Step of selecting and determining an MSA as a DMA of the MH further comprises:
obtaining a Previous DMA (PDMA) of the MH and instructing the PDMA to delete all the information of the MH.

12. The method according to claim 8, wherein the Step of selecting and determining an MSA as a DMA of the MH comprises:
setting up a new multicast route entry for the MH when the MH moves to a new multicast sub-network and there is no multicast group which the MH requests to join in the multicast route list of the multicast sub-network;
deciding whether there is DMA information of the MH saved in the MSA, if there is DMA information of the MH in the MSA, taking this DMA as the DMA of the MH, and terminating the current procedure; otherwise, deciding the DMA of the MH according to the PDMA of the MH.

13. The method according to claim 12, wherein the Step of deciding the DMA of the MH further comprises:
obtaining the PDMA of the MH through communication with the previous MSA of the MH; and
communicating with the PDMA of the MH and deciding whether a DMA switch is in need, if a DMA switch is in need, taking the MSA where the MH is located as the DMA of the MH and storing the DMA information of the MH; otherwise, taking the PDMA of the MH as the DMA of the MH.

14. The method according to claim 13, wherein the Step of deciding whether a DMA switching is in need comprises:
deciding whether the number of the MSAs recorded in the DMA has exceeded a set number, wherein the MSAs are the MSAs that the MH passes when moving, if the number of the MSAs recorded in the DMA exceeds the set number, deciding that it is needed to implement a DMA switch, otherwise, deciding that it is not needed to implement a DMA switch.

15. The method according to claim 13, wherein the Step of implementing the multicast service for the MH through the determined DMA comprises:
if the MSA where the MH is located is taken as the DMA of the MH, the MH joining the multicast group directly to implement the multicast service; and
if the PDMA of the MH is taken as the DMA of the MH, the MH implementing the multicast service through the tunnel between itself and the DMA.

16. The method according to claim 7, further comprising:
the MSA detecting periodically whether the MH has left the multicast sub-network, if the MH has left the multicast sub-network, deleting the MH from the recorded DMA information and deleting the MH from the multicast route list at the same time.
